# EUROPEAN PATENT APPLICATION

(11) **EP 2 524 723 A1**
(43) Date of publication of application: **21.11.2012**
(21) Application number: 12166978.2
(22) Date of filing: 07.05.2012
(51) Int. Cl.: B01D 27/10, B01D 27/14

(54) **Filter arrangements and filter apparatuses which include filter arrangements**

(30) Priority: 18.05.2011 US 201113110527
(71) Applicant: Pall Corporation, Port Washington, NY 11050 (US)
(72) Inventor: Brandt, Jay, New Port Richey, Florida 34654 (US); Scherch, Rich, New Port Richey, Florida 34655 (US)
(74) Representative: Hoeger, Stellrecht & Partner Patentanwälte

(57) **Abstract**

A filter apparatus includes a housing assembly and a filter arrangement mounted in the housing assembly. The filter arrangement includes a reusable core assembly, a first filter assembly removably mounted around the exterior of the reusable core assembly, and a bypass assembly removably mounted to the reusable core assembly at least partially in the interior of the core assembly. The bypass assembly includes a bypass valve mechanically connected to a second filter assembly.

## Description

### Field of the Invention

The present invention relates to filter arrangements and filter apparatuses which include filter arrangements for filtering any of numerous contaminants from a wide variety of fluids. The fluids may be gases, liquids, and/or mixtures of gases, liquids, and/or solids. The contaminants may be, for example, solids, colloids, and/or gels and are often in the form of particles or particulates. Filter arrangements and filter assemblies embodying the invention are useful in many different fluid systems. In one of many examples, embodiments of the invention may be used to filter solid and/or colloidal particles from hydraulic or lubrication oil used in large mechanical or electromechanical devices, including wind turbines for generating electricity.

Embodiments of the invention include a first filter assembly, which may be disposable, mounted around a reusable core assembly. A fluid may be directed through the first filter assembly from the outer or upstream surface to the inner or downstream surface, while the reusable core assembly supports the first filter assembly against the forces associated with fluid flow. The first filter assembly may include a permeable filter medium for removing contaminants from the fluid. Initially, the filter medium is clean and a relatively small difference in pressure between the upstream and downstream surfaces will maintain an ample flow of fluid through the first filter assembly. As more fluid passes through the first filter assembly, the filter medium may become increasingly clogged or fouled. The pressure difference between the upstream and downstream surfaces may increase and/or the flow of fluid through the disposable filter assembly may decrease.

For many applications, it is often preferable to maintain a sufficient flow of fluid through the filter arrangement or the filter apparatus, even when the filter medium is significantly fouled. Consequently, embodiments of the invention may further include a bypass assembly which allows the fluid to bypass the first filter assembly when the filter medium is fouled. The bypass assembly may be removably mounted at least partially in the interior of the reusable core assembly and may include a bypass valve and a second filter assembly, which may be cleanable and/or reusable. For many embodiments, the second filter assembly may have a filter medium which is coarser than the filter medium of the first filter assembly. The bypass valve may open when the first filter assembly becomes sufficiently fouled that the pressure difference across the first filter assembly exceeds a predetermined value, allowing unfiltered fluid to bypass or flow around the fouled first filter assembly. The second filter assembly may be positioned in the bypass flow to remove at least the larger contaminants that might otherwise damage components of the fluid system which are downstream from the filter arrangement. After the fouled first filter assembly is replaced with a new, clean first filter assembly, the bypass valve may close, and fluid flow may be reestablished through the new first filter assembly.

The bypass valve may open in other circumstances even if the first filter assembly is not fouled. For example, during a cold startup of a fluid system, the cold, unfiltered fluid may be very thick or viscous. Forcing a cold, viscous unfiltered fluid through the fine filter medium of the first filter assembly might damage, e.g., rip or tear, the fine filter medium. However, a pressure difference large enough to force the cold, viscous unfiltered fluid through the first filter assembly may exceed the predetermined value for opening the bypass valve. The open bypass valve allows the cold, viscous unfiltered fluid to bypass the first filter assembly without damaging the finer filter medium and to pass through the second filter assembly. The filter medium of the secondary filter assembly may be a coarser filter medium and/or a more robust porous metal medium. Consequently, the cold, viscous unfiltered fluid passes through the filter medium of the second filter assembly without damaging the filter medium. Consequently, a bypass flow of at least coarsely filtered fluid may be provided for the filter system even during a cold startup. After the fluid system has been running for a while, the unfiltered fluid becomes warmer and thinner or less viscous. The pressure difference needed to force the warm, less viscous unfiltered fluid through the first filter assembly may then fall below the predetermined value for opening the bypass valve. The bypass valve may then close, redirecting the warm, less viscous unfiltered fluid through the first filter assembly.

### Summary of the Invention

In accordance with one aspect of the invention, filter arrangements may comprise a reusable core assembly, a first filter assembly, and a bypass assembly. The reusable core assembly may have an axis and first and second ends and may include a hollow perforated core having an exterior surface and an interior. The first filter assembly may be removably mounted around the reusable core assembly on the exterior surface of the core. The first filter assembly may include a hollow filter having a filter medium, an internal surface, and opposite ends, and an end cap may be positioned at each end of the filter. The first filter assembly may be axially moveable between a first position and a second position. In the first position the end caps of the first filter assembly may be sealed to the ends of the reusable core assembly and the interior surface of the first filter assembly may be closely adjacent to the exterior surface of the core. In the second position, the first filter assembly may be removed from the reusable core assembly. The bypass assembly may be positioned at least partially in the interior of the core. The bypass assembly may include a bypass valve and a second filter assembly mechanically connected to the bypass valve. The bypass assembly may be axially moveable along the interior of the core between a first position and a second position. In the first position, at least a portion of the bypass assembly may be in the interior of the core. In the second position, the bypass assembly may be removed from the reusable core assembly.

In accordance with another aspect of the invention, filter apparatuses may comprise a housing assembly and a filter arrangement. The housing assembly may include an interior and an inlet and an outlet which define a fluid flow path through the interior of the housing. The filter arrangement may be positioned in the interior of the housing assembly in the fluid flow path. The filter arrangement may include a reusable core assembly, a first filter assembly, and a bypass assembly. The core assembly may be mounted to the housing assembly and may include an axis, a hollow, perforated core, and first and second seats. The perforated core may have an exterior surface, an interior, and opposite ends, and the seats may be positioned at the ends of the core. The first filter assembly may be removably mounted around the reusable core assembly on the exterior surface of the perforated core. The first filter assembly may include a hollow filter and first and second end caps. The hollow filter may have a filter medium, an interior surface, and a first and second ends, and the end caps may be mounted to the ends of the filter. The first filter assembly may be axially moveable between a first position and a second position. In the first position, the end caps of the first filter assembly may be sealed to the seats of the reusable core assembly and the interior surface of the first filter assembly may be closely adjacent to the exterior surface of the core. In the second position, the first filter assembly may be removed from reusable core assembly. The bypass assembly may be removably mounted to the reusable core assembly at least partially in the interior of the core. The bypass assembly may include a bypass valve and a second filter assembly mechanically connected to the bypass valve. The bypass assembly may be axially moveable along the interior of the core between a first position and a second position. In the first position, at least a portion of the bypass assembly may be in the interior of the core. In the second position, the bypass assembly may be removed from the reusable core assembly.

Filter arrangements and filter apparatuses embodying the invention have many advantages. For example, the first filter assembly may serve as the primary filter assembly, effectively and reliably removing contaminants from the fluid. In addition, because the first filter assembly is removably mounted to the reusable core assembly, the first filter assembly may be quickly and easily removed and replaced once it becomes fouled. The fouled filter assembly is simply slipped axially off of the exterior of the reusable core assembly and a new, clean filter assembly is slipped axially onto the exterior of the reusable core assembly. For many embodiments, the first filter assembly may be a disposable filter assembly, i.e., a filter assembly having substantially no metal components. Because the first filter assembly is separable from the reusable core assembly and/or because the first filter assembly may have substantially no metal components, replacing the first filter assembly may generate less waste and the waste may be easily incinerated. Further, the first filter assembly may be very lightweight, and for many applications weight is an important factor. For example, filter arrangements and filter apparatuses embodying the invention may be used in wind turbines that may extend some 100 meters or more above the ground or the sea. Carrying a lightweight filter assembly up and down the wind turbines makes replacing the first filter assembly both easier and faster, reducing the amount of time the wind turbines are out of service for maintenance.

Removably mounting the bypass assembly, including the bypass valve and the second filter assembly, to the reusable core assembly further reduces waste and weight. The secondary filter assembly may serve as a secondary filter assembly that may temporarily substitute for a fouled primary filter assembly. Although the second filter assembly may also be a disposable filter assembly, for many embodiments the second filter assembly may be a reusable filter assembly that can be cleaned in place and reinstalled, for example, whenever the primary filter assembly is replaced. The bypass valve may also be a reusable component. The disposable waste may then be limited to the lightweight, fouled primary filter assembly. In addition, because the second filter assembly is mechanically connected to the bypass valve, both components may quickly and easily be removed from the reusable core assembly, inspected and cleaned, and reinstalled at the same time, further reducing any out-of-service time. Consequently, filter arrangements and filter apparatuses embodying the invention both enhance productivity and minimize damage to the environment.

### Brief Description of the Drawings

Fig. 1 is a cross-sectional view of a filter apparatus including a housing assembly and a filter arrangement positioned in the housing assembly.

Fig. 2 is an isometric view of a linkage.

Fig. 3 is a cross-sectional view of a portion of another filter arrangement.

### Description of Embodiments of the Invention

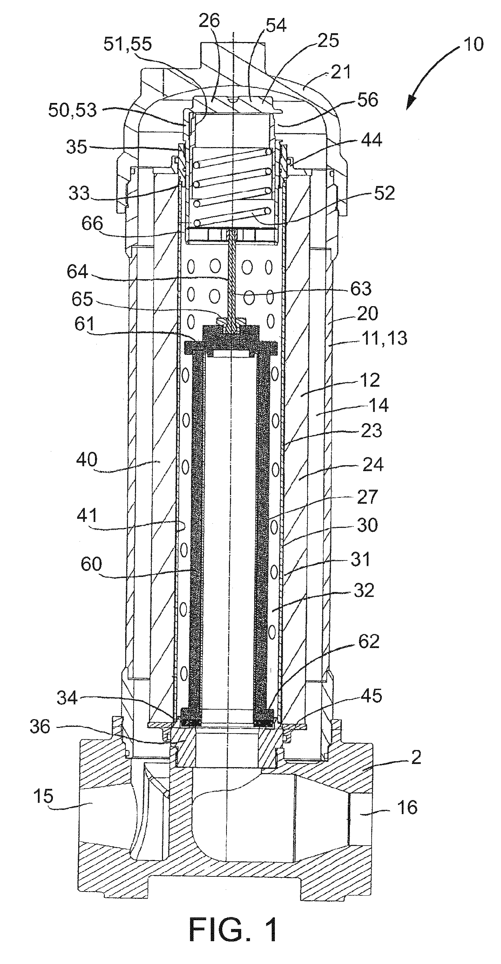

Filter apparatuses and filter arrangements embodying the invention may be structured in a wide variety of ways. One of many different examples of a filter apparatus 10, which comprises a housing assembly 11 and a filter arrangement 12 positioned in the housing assembly 11, is shown in Fig. 1.

The housing assembly may be variously structured. For example, the housing assembly 11 may include a housing 13 which defines an interior 14. The housing 13 may have a fluid inlet 15 and a fluid outlet 16 and may further define a fluid flow path through the interior 14 of the housing 13 between the inlet 15 and the outlet 16. The housing may include one or more ports in addition to the inlet and the outlet, including, for example, a vent, a drain, and/or one or more ports for sensors, such as temperature and pressure sensors.

The housing assembly may be a multipiece structure. For example, as shown in Figure 1 the housing 13 may comprise a casing 20 having opposite ends=, a cover 21 on one end of the casing 20, and a header 22 on the other end of the casing 20. The casing 20 may be configured in a variety of ways. For example, it may be a single or multipiece structure and may have a shape which generally corresponds to the shape of the filter arrangement 12. In the illustrated embodiment the casing 20 may have a generally cylindrical shape and may surround the filter arrangement 12. The interior surface of the casing 20 may be spaced from the exterior surface of the filter arrangement 12 to define a generally annular space which comprises a portion of the fluid flow path and allows fluid to flow between the casing 20 and the filter arrangement 12 and into, or out of , the filter arrangement 12.

The cover 21 may be permanently or removably joined to the casing 20 on one end of the casing 20, e.g., an upper end. In the illustrated embodiment, the cover 21 may be removably sealed, e.g., by threads or bolts, to the end of the casing 20, allowing access to the filter arrangement 11 by simply removing the cover 21. The cover 21 may define a space above the filter arrangement 12 that fluidly communicates with the annular space in the casing 20 and that, together with the annular space in the casing, forms a portion of the interior 14 of the housing 13.

The header 22 may be permanently or removably joined to the end of the casing 20 opposite the cover 21. In the illustrated embodiment the header 22 may be removably sealed, e.g., by threads or bolts, to the end of the casing 20, allowing further access to the filter arrangement 12 by simply removing the casing 20 with the cover 21. The header 22 may have a single piece or multipiece structure and may include the inlet 15 and the outlet 16. One or more fluid passages within the header may direct fluid from the inlet to the filter arrangement and from the filter arrangement to the outlet. For example, in the illustrated embodiment the inlet 15 in the header 22 may fluidly communicate via inlet passages with the annular space between the casing 20 and the filter arrangement 12, while outlet passages in the header 22 may provide fluid communication between the filter arrangement 12 and the outlet 16, allowing fluid to flow outside-in through the filter arrangement 12. Alternatively, the housing assembly and the filter arrangement may be configured to direct unfiltered fluid inside-out through the filter arrangement.

The housing assembly may be structured in many other ways. For example, the cover and the casing may be formed as a single piece, e.g., a bowl, which may be removably joined to the header. As another example, the inlet and/or the outlet may be in a different portion of the housing assembly, e.g., the casing or the cover. The components of the housing assembly may be formed from any material, e.g., a metallic or polymeric material, which is compatible with the fluid and capable of withstanding the operating temperatures and pressures.

The filter arrangement 12 may comprise a reusable core assembly 23, a primary filter assembly 24, and a bypass assembly 25 which includes a bypass valve 26 and a secondary filter assembly 27. The reusable core assembly 23 may be permanently or removably mounted to the housing assembly 11 in many different ways. For example, the core assembly 23 may be removably sealed, e.g., by threads or bolts, at an open outlet end of the core assembly 23 to the housing 13, e.g. to the header 22, allowing the open outlet end of the core assembly 23 to fluidly communicate with the outlet 16 via the outlet passages in the header 22. As another example, the housing assembly, e.g., the header, may have a nipple that fluidly communicates with the outlet via the outlet passages in the header. The outlet end of the reusable core assembly may be configured as a fitting which receives the nipple of the housing assembly. An O-ring may seal the fitting to the nipple.

The reusable core assembly 23 may be structured in a variety of ways, for example, as a single piece or a multipiece structure, and may be formed from a metallic or polymeric material. For many embodiments, the core assembly 23 may include a perforated core 30 having a regular or irregular array of openings that allow fluid to flow through the core 30. The perforated core 30 may, for example, have a generally cylindrical shape with a central axis and may include an exterior surface 31, an interior 32, and opposite ends 33, 34. The core assembly 23 may further include a seat 35, 36 at each end 33, 34 of the core. For some embodiments, each seat may be a unitary, non-perforated extension of the core at each end. However, for many embodiments, each seat 35, 36 may comprise a separate end piece mounted to the end of the core 23. Each seat 35, 36 may have an exterior surface arranged to seal against the primary filter assembly 24.

The primary filter assembly 24 may be removably mounted to the reusable core assembly 23 around the exterior surface 31 of the core 30 and may be configured in any of numerous ways. For example, the primary filter assembly 24 may comprise a hollow filter 40 having a permeable filter medium, an interior surface 41, and opposite ends and an end cap 44, 45 sealed to each end of the filter 40. The hollow filter 40 may have an inner diameter that corresponds to the outer diameter of the core 30. The interior surface 41 of the hollow filter 40 may then be closely adjacent to the exterior surface 31 of the core 30, allowing the core 30 to support the filter 40 against the forces associated with fluid flowing outside-in through the primary filter assembly 24. For some embodiments the filter may not be pleated, but for most embodiments the filter 40 comprises a plurality of pleats that extend axially between the ends of the filter 40. The height of each pleat may be generally equal to, or greater than, the radial distance between the inner and outer diameters of the hollow filter. Further, the filter may consist only of the filter medium or may comprise a multilayer structure having one or more layers of filter medium and one or more additional layers. For example, the multilayer composite may include a porous layer upstream of, e.g., on the outer side of, the filter medium layers(s) and/or a porous layer downstream of, e.g., on the inner side of, the filter medium layer(s). The porous layers may be coarser than the filter medium and may serve as drainage layers for draining fluid to or from the filter medium and/or support layers for structurally supporting the filter medium. The multilayer composite may further include a cushioning layer between a porous layer and the filter medium to protect the filter medium from abrasion by the porous layer.

The permeable filter medium may be constructed in any of a variety of ways, including, for example, as a supported or unsupported membrane or as a fibrous structure, such as a hollow cylindrical fibrous mass or a woven or non-woven fibrous sheet which may be wrapped or pleated. The filter medium may be formed from any of numerous materials, including, for example, natural or synthetic polymers and glass or other ceramic fibers, and may have a variety of fluid treatment characteristics, including, for example, a nominal removal rating in the submicron range, the micron range, or coarser. For many embodiments, the nominal removal rating may be less than about 25 microns. In the illustrated embodiment, the filter medium may comprise a matrix of glass fibers supported on a porous polymeric substrate and may have a nominal removal rating of about 10 microns or less, e.g., about one micron or less.

The end caps 44, 45 of the primary filter assembly 24 may be bonded to the opposite ends of the hollow filter 40 in any of numerous ways and may be variously configured. For example, one or both end caps 44, 45 may be an open end cap having a central opening. The central opening may have a diameter which corresponds to the outer diameters of the perforated core 30 and the seats 35, 36 of the reusable core assembly 23, allowing the removable primary filter assembly 24 to slide axially along the exterior of the reusable core assembly 23. The end caps 44, 45 may be spaced axially a distance similar to the axial distance between the seats 35, 36 and may be sealed to the seats 35, 36, for example, by O rings mounted in the central opening of the end caps 44, 45, when the primary filter assembly 24 is mounted to the reusable core assembly 23.

Because the primary filter assembly 24 is separable from, and does not include, the reusable core assembly 23, the primary filter assembly 24 is lightweight, and replacing the primary filter assembly 24 generates less waste. Further, for most embodiments the primary filter assembly may comprise a disposable filter assembly, i.e., a filter assembly having substantially no metal components. For example, the filter may be fashioned virtually entirely from polymeric materials, except for the glass fiber matrix of the filter medium, the end caps may be fashioned virtually entirely from polymeric materials, and the O-rings may be fashioned virtually entirely from elastomeric materials. Without any metal components, a disposable filter assembly may be even lighter and may be easily incinerated.

Many features of the previously described reusable core assembly and the replaceable primary filter assembly may be further described in United States Patents No. 5,252,207, No. 5,476,585, and No. 5,543,047. Further, many of the components of the housing assembly, the reusable core assembly, and the primary filter assembly may be electrically conductive to offset any electrical imbalances and reduce electrical discharges that might be caused by fluid flowing through the filter arrangement, as disclosed, for example, in United States Patent No. 7,128,835.

The bypass assembly 25 may be removably mounted to the reusable core assembly 23 at least partially in the interior 32 of the core assembly 23. For example, in the embodiment of Fig. 1 the secondary filter assembly 27 may be positioned entirely within the reusable core assembly 23 and sealed against the core assembly 23 near the outlet end 34. The bypass valve 26 may be positioned partially within the interior 32 of the core assembly 23 and removably sealed, e.g., by threads or bolts, to the core assembly 23 near the opposite end 33. The remainder of the bypass valve 26 may extend beyond the core assembly 23, for example, into the space between the core assembly 23 and the cover 21 of the housing assembly 11. Alternatively, the bypass valve may be removably mounted to the core assembly entirely within the core assembly such that the entire bypass assembly may be removably mounted within the interior of the reusable core assembly.

The bypass valve may be reusable and may be structured in many ways to provide a bypass flow path around the primary filter assembly when the primary filter assembly becomes unduly fouled and/or when flow through the primary filter assembly becomes insufficient. For example, the bypass valve 26 may include a stationary valve body 50 and a moveable valve member 51 or poppet biased in a closed position against the valve body 50 by a spring 52. The force of the spring 52 may be selected to hold the moveable valve member 51 in the closed position until the primary filter assembly 24 becomes so fouled that the differential pressure across the primary filter assembly 24 forces the valve member 51 away from the valve body 50 against the force of the spring 52. The bypass valve 26 is then in an open position and unfiltered fluid may flow around, or bypass, the primary filter assembly 24 into the interior 32 of the core assembly 23.

The valve body and the moveable valve member may be structured in a variety of ways. For example, in the embodiment illustrated in Fig. 1 the valve body 50 may comprise a stationary exterior sleeve 53 capped by a blind end piece 54 at an upstream end of the exterior sleeve 53. The downstream end of the exterior sleeve 53 may be open. The exterior sleeve 53 may be removably sealed, e.g., by threads or bolts, to the reusable core assembly 23, e.g., to the seat piece 35 nearer the cover 21. The moveable valve member 51 may comprise a moveable interior sleeve 55 slideably sealed against the stationary exterior sleeve 53 and having opposite open ends. In the closed position, one open end of the slideable interior sleeve 55 may be sealed against the blind end piece 54 by the force of the spring 52. The other end of the interior sleeve 55 and the downstream end of the exterior sleeve 53 may open into the interior 32 of the core assembly 23. Openings 56 in the exterior sleeve 53 near the blind end piece 54 allow unfiltered fluid in the space below the cover 21 to bear against the outside of the moveable interior sleeve 55. At a predetermined differential pressure corresponding to undue fouling of the primary filter assembly 24 and/or insufficient fluid flow through the fouled primary filter assembly 24, the unfiltered fluid forces the moveable valve member 51, e.g., the moveable interior sleeve 55, away from stationary valve body 50, e.g., the blind end piece 54, opening the bypass valve 26.

The secondary filter assembly 27 may be positioned in the interior 14 of the housing assembly 11 in the bypass flow of unfiltered fluid that results when the bypass valve 26 opens. For example, in the embodiment illustrated in Fig. 1 the secondary filter assembly 27 may be positioned in the bypass flow of unfiltered fluid in the interior 32 of the core assembly 23 downstream from the bypass valve 26.

The secondary filter assembly 27 may be configured in any of numerous ways. For example, the axial length of the secondary filter assembly 27 may be shorter than the axial length of the primary filter assembly 24 or the reusable core assembly 23. Further, the outer diameter of the secondary filter assembly 27 may be smaller than the inner diameter of the reusable core assembly 23, providing an annular space between the interior surface of the reusable core assembly 23 and the exterior of the secondary filter assembly 27. The secondary filter assembly 27 may comprise a hollow filter 60 having a permeable filter medium, an exterior surface, an interior, and opposite ends and an end cap 61, 62 sealed to each end of the hollow filter 60. The end cap 61 closer to the bypass valve 26 may be a blind end cap, while the end cap 62 on the other end of the hollow filter 60 may be an open end cap. The open end cap 62 may be sealed to the reusable core assembly 23, for example, to the seat piece 36 nearer the header 22 by a gasket, or to the housing assembly, for example, to the header. Alternatively, the secondary filter assembly and the reusable core assembly, or the housing assembly, may be sealed to one another in other ways, including, for example, a threaded connection with or without a seal, such as an O-ring.

The hollow filter and the end caps of the secondary filter assembly may be similar to those of the primary filter assembly. For example, both the primary and secondary filter assemblies may be disposable filter assemblies. However, for most embodiments the secondary filter assembly 27 may comprise a reusable filter assembly that may be cleaned and reinstalled, for example, when the primary filter assembly 24 is replaced. For example, the end caps 61, 62 of the secondary filter assembly 27 may be formed from a metallic material and/or the filter medium may comprise a pleated or non-pleated porous metal medium, including, for example, a porous metal medium formed from a metal screen. Other porous metal media include Rigimesh^{®} metal media, PMM^{®} metal media, and PMF^{®} metal media available from Pall Corporation of Port Washington, New York, USA. Having a porous metal medium allows the secondary filter assembly 27 to be thoroughly cleaned, for example, by high temperature and/or aggressive cleaning solutions, and reused over the lifetimes of many disposable primary filter assemblies. Further, the secondary filter assembly 27 may serve as a last chance filter protecting the components of the filter system downstream of the secondary filter assembly from flaws in, or catastrophic failure of, the components upstream of the secondary filter assembly, including, for example, the primary filter assembly and the bypass valve. For many, but not all, embodiments of the invention, the filter medium of the secondary filter assembly 27 may be coarser than the filter medium of the primary filter assembly 24. For example, the nominal removal rating of the filter medium of the secondary filter assembly may be in the micron range or coarser. For some embodiments the nominal removal rating may be about 25 microns or greater, e.g., about 50 micros or greater. The removal rating of the secondary filter assembly may then be coarse enough to ensure that sufficient unfiltered fluid flow through the filter arrangement continues for an extended period of time after the bypass valve opens but is fine enough to remove large contaminant particles that might otherwise damage the fluid system in which the filter apparatus is a component.

The secondary filter assembly 27 may be mechanically connected to the bypass valve 26. This mechanical connection is independent of any mechanical coupling of the secondary filter assembly to the bypass valve by means of the core assembly. By mechanically connecting the secondary filter assembly and the bypass valve independently of the reusable core assembly, both components can be quickly and easily removed from the reusable core assembly, inspected and cleaned, and reinstalled at the same time, reducing the amount of time that the fluid system may be out of service.

The secondary filter assembly and the bypass valve may be mechanically connected, removably or permanently, in a wide variety of ways. For example, a mechanical linkage extending through the interior of the core may mechanically connect the secondary filter assembly and the bypass valve, and the mechanical linkage may be configured in numerous ways. For example, the mechanical linkage may be configured to simply pull one of the secondary filter assembly and the bypass valve out of the interior of the core assembly when the other is removed from the core assembly. For some embodiments, the mechanical linkage may then include a chain extending through the interior of the core assembly between the bypass valve and the secondary filter assembly. As the bypass valve is uninstalled, e.g., unthreaded, and removed from the core assembly, the chain may pull the secondary filter assembly along with the bypass valve, first unsealing the secondary filter assembly from the core assembly or the housing assembly and then pulling the secondary filter assembly from the interior of the core assembly. Alternatively, the mechanical linkage may be configured to both pull and push one of the secondary filter assembly and the bypass valve out of and into the interior of the core assembly when the other is removed and reinstalled. For example, the mechanical linkage may then include a rod extending through the interior of the core assembly between the bypass valve and the secondary filter assembly. As the bypass valve is removed from the core assembly, the rod may first unseal the secondary filter assembly and then pull the secondary filter assembly from the interior of the core assembly. When the bypass assembly is reinstalled in the core assembly, the secondary filter assembly may be pushed into the interior of the core assembly by the rod and then sealed to the core assembly, or the housing assembly as the bypass valve is mounted, e.g., threaded, onto the core assembly.

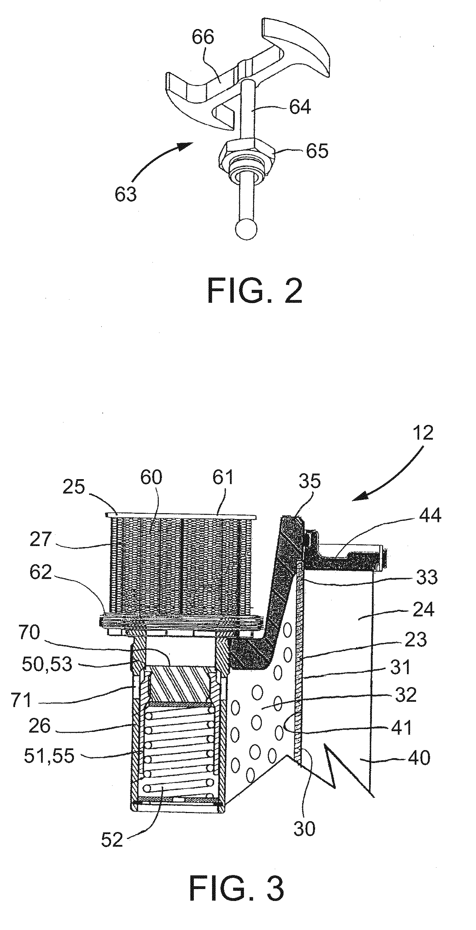

In the embodiment illustrated in Fig. 1, the mechanical linkage 63 may comprise a generally T-shaped link element, as shown in Fig. 2. The link element 63 may include a rod 64 that may be removably attached to the blind end cap 61 of the secondary filter assembly 27 by a nut 65 at one end of the link element 63. Alternatively, the rod may be permanently attached to the blind end cap. At the other end of the link element 63 a cross piece 66 extending perpendicularly from the rod 64 may be permanently or removably fitted to the bypass valve 26, e.g., to the open end of the stationary exterior sleeve 53. The cross piece 66 may be variously configured to allow unfiltered fluid to flow through the bypass valve 26 past the cross piece 66 to the secondary filter assembly 27.

In operation, unfiltered fluid may be directed into the filter apparatus 10 via the inlet 15 in the housing assembly 11 and along the flow path in the interior 14 of the housing assembly 11 through the filter arrangement 12, where the fluid may be filtered. For example, unfiltered fluid may be directed into the inlet 15 in the header 22, along the inlet passages in the header 22 to the annular space between the casing 20 and the filter arrangement 12 and the space between the cover 21 and the filter arrangement 12. With the bypass valve 26 in the closed position, the unfiltered fluid then passes outside-in through the filter 40 of the primary filter arrangement 24, where the filter medium removes contaminants from the unfiltered fluid.

Filtered fluid may then be directed along the fluid flow path from the filter arrangement 12 to the outlet 16 in the housing assembly 11 and out of the filter apparatus 10. For example, filtered fluid may pass from the primary filter assembly 24 through the perforated core 30 and into the interior 32 of the reusable core assembly 23. In the embodiment illustrated in Fig. 1, the filtered fluid may then pass through the secondary filter assembly 27, e.g., outside-in through the filter 60 into the interior of the secondary filter assembly 27. Because the filter medium of the secondary filter assembly 27 is coarser than the filter medium of the primary filter assembly 24, the filtered fluid passes easily through the secondary filter assembly 27 and the secondary filter assembly 27 remains largely unfouled. From the interior of the secondary filter assembly 27, the filtered fluid may pass through the outlet of the secondary filter assembly 27, e.g., the open end cap 62, through the outlet of the reusable core assembly 23, e.g., the open seat piece 36 near the header 22, and along the outlet passages in the header 22 to the outlet 16 in the housing assembly 11.

After the primary filter assembly 24 becomes sufficiently fouled, or during a cold startup, the differential pressure across the primary filter assembly 24 may become unduly large and/or fluid flow through the primary filter assembly 24 may become insufficiently small. At this predetermined differential pressure, the bypass valve 26 may open against the force of the spring 52, and unfiltered fluid may flow around, or bypass, the primary filter assembly 24, flowing from the space between the cover 21 and the filter arrangement 12 through the open bypass valve 26 and into the interior 32 of the reusable core assembly 23. The unfiltered fluid may then pass through the secondary filter assembly 27, e.g., outside-in through the filter 60, where the filter medium, e.g., a coarser filter medium, may for an extended period remove at least the larger contaminants that might otherwise damage components of the fluid system which are downstream from the filter arrangement 12. From the interior of the secondary filter assembly 27, the filtered fluid may be directed to the outlet 16 of the housing assembly 11 and out of the filter apparatus 10.

After a period of time, the filter apparatus 11 may be temporarily taken out-of-service and the primary filter assembly24 may be quickly and easily replaced. For example, the cover 21 may be removed from the casing 20, or the casing 20 with the cover 21 may be removed from the header 22, allowing access to the filter arrangement 12. The fouled primary filter assembly 24 may then be axially slid off of the reusable core assembly 23 along the exterior surface 31 of the perforated core 30. The primary filter assembly 24 may move along the exterior surface 31 of the reusable core assembly 23 between a first position and a second position. In the first position, the end caps 44, 45 of the primary filter assembly 24 may be sealed against the ends, e.g., the seats 35, 36, of the reusable core assembly 23 and interior surface 41 of the primary filter assembly 24, e.g., the interior surface 41 of the filter 40, may be closely adjacent to the exterior surface 31 of the reusable core assembly 23, e.g., the exterior surface 31 of the perforated core 30. In the second position, the primary filter assembly 24 may be removed from the reusable core assembly 23. A new primary filter assembly 24 may then be axially slid onto the reusable core assembly 23 along the external surface 31 of the core 30 until the end caps 44, 45 of the primary filter assembly 24 seal against the seats 35, 36 of the reusable core assembly 23.

Whenever the primary filter assembly 24 is replaced, or at other maintenance intervals, the bypass assembly 25 may also be removed and inspected. For example, the bypass valve 26 may be removed, e.g., unthreaded, from the reusable core assembly 23 and pulled from the interior 32 of the reusable core assembly, pulling the bypass valve 26, the mechanical linkage 63, e.g., the link element, and the secondary filter assembly 27 from the interior 32 of the core assembly 23 all at the same time. The bypass assembly 25 may move along the interior 32 of the reusable core assembly 23, e.g., the interior 32 of the core 30, between a first position and a second position. In the first position, at least a portion of the bypass assembly 25, e.g., the secondary filter assembly 27, the mechanical linkage 63, and a portion of the bypass valve 26, may be in the interior 32 of the reusable core assembly 23, e.g., the interior 32 of the perforated core 30. In the second position, the bypass assembly 25 may be removed from the usable core assembly 23. If the secondary filter assembly is a disposable filter assembly, it may be replaced at the end of the mechanical linkage. However, for many embodiments, the secondary filter assembly 27 may be a reusable filter assembly, and the secondary filter assembly 27 along with the bypass valve 26 may be inspected and cleaned. The cleaned or renewed bypass assembly 25 may then be reinstalled in the interior 32 of the reusable core assembly 23. For example, the bypass assembly 26 may be inserted into the interior 32 of the core assembly 23 with the open end cap 62 of the secondary filter assembly 27 facing the header 22. As the bypass valve 26 is inserted into and mounted, e.g., threaded, to the core assembly 23, the open end cap 62 of the secondary filter assembly 27 may be forced into sealing engagement with the core assembly 23, or the housing assembly 11, by the mechanical linkage 63, e.g., the link element. With the primary and secondary filter assemblies reinstalled, the filter apparatus 10 may be returned to service.

While various aspects of the invention have been described and/or illustrated with respect to several embodiments, the invention is not limited to those embodiments. For instance, one or more features of these embodiments may be eliminated or modified or one or more features of one embodiment may be combined with one or more features of other embodiments without departing from the scope of the invention. Even embodiments with very different features may be within the scope of the invention.

For instance, the mechanical linkage may be eliminated, and the bypass valve may be mechanically connected to the secondary filter assembly by directly connecting the two components permanently or removably, e.g., by threads, bolts, or welds. Alternatively or additionally, the bypass assembly may be configured with the secondary filter assembly positioned upstream from the bypass valve in the bypass fluid flow path. The embodiment of the filter arrangement 12 illustrated in Fig. 3 is one of many examples that may have one or both of these features. Many of the components of the filter arrangement 12 shown in Fig. 3 may be similar to the components of the filter arrangement 12 shown in Fig. 1, and similar components are labeled with the same reference numerals.

In the embodiment of Fig. 3, the primary filter assembly 24 may again be removably mounted to the reusable core assembly 23 around the exterior 31 of the perforated core 30, and the bypass assembly 25 may again be removably mounted to the reusable core assembly 23 at least partially in the interior 32 of the core assembly 23. For example, the seat piece 35 nearer the cover (not shown) may be threaded or bolted to the bypass assembly 26, e.g., the bypass valve 26. However, the bypass assembly 25 may include a bypass valve 26 that is directly mechanically connected to the secondary filter assembly 27, either permanently or removably. Further, the secondary filter assembly 27 may be positioned upstream of the bypass valve 26 in the bypass flow path. For example, the secondary filter assembly 27 may be positioned at least partly in the space between the cover and the filter arrangement 12 with the blind end cap 61 of the secondary filter assembly 27 facing the cover. The open end cap 62 of the secondary filter assembly 27 may be directly mechanically connected, permanently or removably, to the bypass valve 26, for example, at the stationary valve body 50, e.g., the stationary exterior sleeve 53. The stationary valve body 50, e.g., the stationary exterior sleeve 53, may have an open end that fluidly communicates with the open end cap 62 of the secondary filter assembly 27. The stationary valve body 50, e.g., the stationary exterior sleeve 53, may also include side openings 70 axially spaced from the open end of the valve body 50. The moveable valve member 51, e.g., the moveable interior sleeve 55, may be capped near the open end of the stationary valve body 50 by a blind end piece 71. The blind end piece 71 of the moveable valve member 51, e.g., the moveable interior sleeve 55, may seal against the stationary valve body 50, e.g., the stationary exterior sleeve 53, between the open end and the side openings 71 in the stationary valve body 50 by the force of the spring 52.

The embodiment of Fig. 3 operates in much the same way as the embodiment of Fig. 1 as previously described. However, when the bypass valve 26 is closed and unfiltered fluid enters the interior of the filter housing (not shown) via the inlet (not shown), the unfiltered fluid passes through the annular space between the casing (not shown) and the filter arrangement 12 and the space below the cover and then passes outside-in through the secondary filter assembly 27, filling the interior of the secondary filter assembly 27 with filtered fluid. With the bypass valve 26 in the closed position, the fluid in the secondary filter assembly 27 remains inside the secondary filter assembly 27, while the unfiltered fluid passes through the primary filter assembly 24.

When the primary filter assembly 24 becomes sufficiently fouled, or during a cold startup, the moveable valve member 51, e.g., the moveable interior sleeve 55 including the blind end piece 71, moves axially , opening the bypass valve 26. Unfiltered fluid then flows around, or bypasses, the primary filter assembly 24 by first flowing through the secondary filter assembly 27, where it is filtered. For example, the unfiltered fluid may flow from the space below the cover outside-in through the filter 60 of the secondary filter assembly 27, where the filter medium of the hollow filter 60 filters the fluid. From the interior of the secondary filter assembly 27, the filtered fluid flows through the open end cap 62 of the secondary filter assembly 27 and through the open bypass valve 26, e.g., the open end and the side openings 70 of the stationary exterior sleeve 55, into the interior 32 of the reusable core assembly 23 and then to the outlet (not shown) of the housing assembly.

Replacing the primary filter assembly 24 in the embodiment of Fig. 3 may be similar to replacing the primary filter assembly 24 in the embodiment of Fig. 1. Servicing the secondary filter assembly 27 may, or may not, be different. For example, in the embodiment of Fig. 3, the exterior of the secondary filter assembly 27 is immediately accessible upon removing the cover or the casing with the cover. Consequently, the secondary filter assembly 27 may be cleaned, or replaced without removing the bypass assembly 25 from the reusable core assembly 27. The bypass valve 26 may be removed from the interior 32 of the reusable core assembly, inspected, and cleaned less often because it is generally not exposed to unfiltered fluid.

In another example of an embodiment within the scope of the invention, the filter arrangement may include a secondary filter arranged to direct the bypass flow of fluid inside-out through the secondary filter element. For example, the bypass assembly may include a bypass valve and a secondary filter assembly position downstream of the bypass valve in the bypass fluid flow path. However, the open end cap of the secondary filter assembly may be sealed to the open downstream end of the bypass valve, e.g., the open downstream, end of the stationary exterior sleeve. When the bypass valve opens, unfiltered fluid passes through the bypass valve and then directly into the interior of the secondary filter assembly through the open end cap. From the interior of the secondary filter assembly, the unfiltered fluid passes inside-out through the filter medium, e.g., the coarser medium and/or the porous metal medium, of the hollow filter, where the fluid is filtered. The filtered fluid then passes into the interior of the reusable core assembly and exits the filter apparatus via the outlet.

The bypass valve and the secondary filter assembly of this embodiment may be mechanically connected in a variety of ways. For example, they may be connected by a mechanical linkage. For instance, a rod may extend from the blind end cap of the secondary filter assembly to the blind end piece of the bypass valve through the interiors of the secondary filter assembly and the bypass valve. For example, one end of the rod may be permanently or removably connected to the blind end cap, e.g., by threads or welds. The other end of the rod may be threaded. The threaded end of the rod may be inserted into the interior of the bypass valve through the open downstream end of the bypass valve and threaded to mating threads in the blind end piece of the bypass valve, joining the open end cap of the secondary filter assembly to the open downstream end of the bypass valve. A seal, e.g., a gasket, between the open downstream end of the bypass valve and the open end cap of the secondary filter assembly may seal the two components to one another. Alternatively, the bypass valve and the secondary filter assembly may be directly mechanically connected to one another. For example, the end cap of the secondary filter assembly and the open end of the bypass valve may be configured with a threaded connection or with a fitting and mating nipple.

All references, including publications, patent applications, and patents, cited herein are hereby incorporated by reference to the same extent as if each reference were individually and specifically indicated to be incorporated by reference and were set forth in its entirety herein.

The use of the terms "a" and "an" and "the" and similar referents in the context of describing the invention (especially in the context of the following claims) are to be construed to cover both the singular and the plural, unless otherwise indicated herein or clearly contradicted by context. The terms "comprising," "having," "including," and "containing" are to be construed as open-ended terms (i.e., meaning "including, but not limited to,") unless otherwise noted. Recitation of ranges of values herein are merely intended to serve as a shorthand method of referring individually to each separate value falling within the range, unless otherwise indicated herein, and each separate value is incorporated into the specification as if it were individually recited herein. All methods described herein can be performed in any suitable order unless otherwise indicated herein or otherwise clearly contradicted by context. The use of any and all examples, or exemplary language (e.g., "such as") provided herein, is intended merely to better illuminate the invention and does not pose a limitation on the scope of the invention unless otherwise claimed. No language in the specification should be construed as indicating any non-claimed element as essential to the practice of the invention.

Several embodiments of this invention have been described herein, and further variations may become apparent to those of ordinary skill in the art upon reading the foregoing description. The inventors expect skilled artisans to employ such variations as appropriate, and the inventors intend for the invention to be practiced otherwise than as specifically described herein. Accordingly, this invention includes all variations, modifications and equivalents of the subject matter recited in the claims appended hereto as permitted by applicable law. Moreover, any combination of the above-described elements in all possible variations thereof is encompassed by the invention unless otherwise indicated herein or otherwise clearly contradicted by context.

## Claims

1. A filter arrangement comprising:
a reusable core assembly which has an axis and first and second ends and includes a hollow, perforated core having an exterior surface and an interior;
a first filter assembly removably mounted around the reusable core assembly on the exterior surface of the core, wherein the first filter assembly includes a hollow filter having a filter medium, an internal surface, and opposite ends and an end cap at each end of the filter, the first filter assembly being axially moveable along the exterior surface of the core between a first position, wherein the end caps of the first filter assembly are sealed to the ends of the reusable core assembly and the interior surface of the first filter assembly is closely adjacent to the exterior surface of the core, and a second position, wherein the first filter assembly is removed from the reusable core assembly; and
a bypass assembly positioned at least partially in the interior of the core of the reusable core assembly, wherein the bypass assembly includes a bypass valve and a second filter assembly mechanically connected to the bypass valve, the bypass assembly being axially movable along the interior of the core between a first position, wherein at least a portion of the bypass assembly is in the interior of the core, and a second position, wherein the bypass assembly is removed from the reusable core assembly.

2. The filter arrangement of claim 1 wherein the filter medium of the second filter assembly is coarser than the filter medium of the first filter assembly.

3. The filter arrangement of claim 1 or 2 wherein first and second ends of the reusable core assembly comprise end pieces mounted to the perforated core, each end piece having a seat, and wherein the end caps of the first filter assembly are sealed to the seats of the reusable core assembly.

4. The filter arrangement of any preceding claim wherein the first filter assembly comprises a disposable filter assembly having substantially no metal components.

5. The filter arrangement of any preceding claim wherein the bypass assembly is mounted to the reusable core assembly.

6. The filter arrangement of any preceding claim wherein the bypass assembly further includes a mechanical linkage mechanically connecting the bypass valve and the second filter assembly.

7. The filter arrangement of any of claims 1-5 wherein the bypass valve and the second filter assembly are directly mechanically connected to one another.

8. The filter arrangement of any preceding claim wherein the bypass valve comprises a stationary external sleeve, a moveable internal sleeve positioned within the stationary external sleeve, and a spring biasing the moveable internal sleeve toward a closed position.

9. The filter arrangement of any preceding claim wherein the bypass valve is removably mounted to the reusable core assembly.

10. A filter apparatus comprising:
a filter arrangement which includes a reusable core assembly, a first filter assembly,
and a bypass assembly, wherein the reusable core assembly includes an axis, a hollow, perforated core, and first and second seats, the core having an exterior surface, an interior, and opposite ends and the seats being positioned at the ends of the core, wherein the first filter assembly is removably mounted around the reusable core assembly on the exterior surface of the core and includes a hollow filter having a filter medium, an interior surface, and opposite ends and first and second end caps mounted to the ends of the filter, the first filter assembly being axially moveable along the exterior surface of the core between a first position, wherein the end caps of the first filter assembly are sealed to the seats of the reusable core assembly and the interior surface of the first filter assembly is closely adjacent to the exterior surface of the core, and a second position, wherein the first filter assembly is removed from the reusable core assembly, and wherein the bypass assembly is removably mounted to the reusable core assembly at least partially in the interior of the core and includes a bypass valve and a second filter assembly mechanically connected to the bypass valve, the bypass assembly being axially moveable along the interior of the core between a first position, wherein at least a portion of the bypass assembly is in the interior of the core, and a second position, wherein the bypass assembly is removed from the reusable core assembly, and
a housing assembly having an interior, an inlet, and an outlet, the inlet and the outlet defining a fluid flow path through the interior of the housing assembly, wherein the filter arrangement is disposed in the interior of the housing assembly in the fluid flow path and the reusable core assembly is mounted to the housing assembly.

11. The filter apparatus of claim 10 wherein the filter medium of the second filter assembly is coarser than the filter medium of the first filter assembly.

12. The filter apparatus of claim 10 or 11 wherein the housing assembly includes a header having the inlet and the outlet.

13. The filter apparatus of any of claims 10-12 wherein the housing assembly further comprises a casing removably mounted to the header and surrounding the filter arrangement.

14. The filter apparatus of any of claims 10-13 wherein the bypass assembly further comprises a mechanical linkage mechanically connecting the bypass valve and the second filter assembly.

15. The filter apparatus of any of claims 10-13 wherein the bypass valve and the second filter assembly are directly mechanically connected to one another.
